# EUROPÄISCHE PATENTSCHRIFT

(11) **EP 0 972 411 B1**
(45) Veröffentlichungstag und Bekanntmachung des Hinweises auf die Patenterteilung: **03.07.2002**
(21) Anmeldenummer: 98912204.9
(22) Anmeldetag: 12.02.1998
(51) Int. Cl.: H04Q 3/00, H04Q 7/24

(54) **VERFAHREN ZUM AUFBAU EINER KOMMUNIKATIONSVERBINDUNG**
METHOD FOR ESTABLISHING A COMMUNICATION LINK
PROCEDE POUR ETABLIR UNE LIAISON DE COMMUNICATION

(30) Priorität: 25.03.1997 DE 19712503
(43) Veröffentlichungstag der Anmeldung: 19.01.2000
(73) Patentinhaber: SIEMENS AKTIENGESELLSCHAFT, 80333 München (DE)
(72) Erfinder: MENZEL, Christian, D-82216 Maisach (DE); GABE, Axel, D-86150 Augsburg (DE)
(86) Internationale Anmeldenummer: DE9800401
(87) Internationale Veröffentlichungsnummer: WO9843448

(56) Entgegenhaltungen:
- EP-A- 0 581 526
- EP-A- 0 738 093
- EP-A- 0 751 691
- GB-A- 2 299 913
- ESKE-CHRISTENSEN B ET AL: "BASIS FUER FLEXIBLERE TELECOM-DIENSTE" FUNKSCHAU, Bd. 63, Nr. 12, 31. Mai 1991, Seiten 54-59, XP000231537
- BELLER M J: "CALL DELIVERY TO PORTABLE TELEPHONES AWAY FROM HOME USING THE LOCAL EXCHANGE NETWORK" COMMUNICATIONS - RISING TO THE HEIGHTS, DENVER, JUNE 23 - 26, 1991, Bd. 2, 23. Juni 1991, Seiten 948-953, XP000269625 INSTITUTE OF ELECTRICAL AND ELECTRONICS ENGINEERS

## Beschreibung

Die Erfindung betrifft ein Verfahren zum Aufbau einer Kommunikationsverbindung in einem aus mehreren vernetzten Vermittlungsknoten bestehenden Kommunikationsnetz und einen Adreßumsetzer zur Unterstützung des Verbindungsaufbaus.

Kommunikationsnetze bestehen aus einer Mehrzahl von untereinander vernetzten Vermittlungsknoten, an die direkt oder über weitere Einrichtungen Kommunikationsendgeräte anschließbar sind. Beispiele für solche Kommunikationsnetze sind das öffentliche Fernsprechnetz (PSTN - Public Switched Telephone Network), Datennetze oder auch Mobilfunknetze, wie das GSM-Mobilfunksystem (Global System for Mobile Communications).

Ein Teilnehmer eines dieser Netze verfügt über ein Kommunikationsendgerät und möchte eine Kommunikationsverbindung zu einem zweiten Kommunikationsendgerät herstellen. Dazu ist es nötig eine betreiberspezifische Rufnummer im Kommunikationsendgerät zu wählen. Diese betreiberspezifische Rufnummer dient den Vermittlungsknoten als Adressierungsinformation für das zweite Kommunikationsendgerät.

Bei der Vielzahl von zukünftigen parallel operierenden Kommunikationsnetzen und dem möglichen Wechsel eines Teilnehmers von einem Kommunikationsnetz eines Netzbetreiber zu einem anderen Kommunikationsnetz eines weiteren Netzbetreiber wird die Bestimmung von betreiberspezifischen Rufnummern immer komplizierter.

Aus EP-A-0 751 691 ist ein intelligentes Netz (IN) bekannt. Mittels TCAP-Nachrichten und dem STP werden Rufnummer eines Gebietes (area code) des einen Betreibers angewählt. Der Betreiber leitet den Anruf an das intelligente Netz weiter. Hier wird ein Datenbankeintrag ausgelesen und der Nummer eine betreiberspezifische Rufnummer hinzugefügt. Der Anruf wird folgend über einen anderen Betreiber umgeleitet.

In Beller, M. J. : "CALL DELIBERY TO PORTABLE TELEPHONES AWAY FORM HOME USING THE LOCAL EXCHANGE NETHWORK" COMMUNICATIONS - RISING TO THE HEIGHTS, DENVER, June 23-26, 1991, Bd. 2, Seiten 948-953, INSTITUTE OF ELECTRICAL AND ELECTRONICS ENGINEERS, wird ein Dienst (800 Method) eines intelligenten Netzes vorgestellt. Analog eines 0130 Dienstes wird über einen SCP eines intelligenten Netzes eine Datenbank angesteuert. Es wird über eine Rufnummer (service access code, 800) das intelligente Netz angewählt. Der SCP kommuniziert über Protokolle (TCAP) mit einem Switch.

Aus ESKE-CHRISTENSEN, B. ET AL: "BASIS FUER FLEXIBLERE TELECOM-DIENSTE", FUNKSCHAU, Bd. 63, Nr. 12, 31. Mai 1991, Seiten 54-59 ist ein intelligentes Netz (IN) bekannt. Der Dienstbenutzer wählt den Zugang zum intelligenten Netz, einer digitalen Vermittlungstechnik, mittels einer Rufnummer (0130). D.h., daß der Dienstbenutzer zuerst mit der Wahl der Rufnummer (0130) einen Service Switching Point (SSP) anwählt, um den Dienst des intelligenten Netzes zu nutzen. Mit dieser Einwahl übermittelt der SSP des intelligenten Netzes eine TCAP (Transaction Capability Application Part)-Nachricht zum SCP (Service Control Point) des intelligenten Netzes. Der SCP steuert eine Datenbank an, und die ausgelesene Rufnummer wird über den STP (Signaling Transfer Point) mittels einer TCAP-Nachricht an den SSP übermittelt. Der SSP führt folgend die Ziffernumsetzung aus und schaltet den Leitweg durch.

Aus GB-A-2 299 913 ist ebenfalls ein intelligentes Netz bekannt. Hier wird das intelligente Netz genutzt um Rufumleitungen, beispielsweise für überlastete Fernverbindungen, zu ermöglichen. Es wählt ein Teilnehmer die Nummer eines zweiten Teilnehmers. Mittels TCAP und SCP wird der Ruf umgeleitet.

Der Erfindung liegt deshalb die Aufgabe zugrunde, ein Verfahren und einen Adreßumsetzer anzugeben, die es dem rufenden Teilnehmer erleichtern, eine Kommunikationsverbindung zu einem weiteren Teilnehmer aufzubauen. Diese Aufgabe wird durch das Verfahren nach den Merkmalen des Patentanspruchs 1 und durch den Adreßumsetzer nach den Merkmalen des Patentanspruchs 17 gelöst. Vorteilhafte Weiterbildungen sind den Unteransprüchen zu entnehmen.

Beim erfindungsgemäßen Verfahren wird von einem ersten Kommunikationsendgerät zum Aufbau einer Kommunikationsverbindung eine erste Adreßinformation an einen ersten Vermittlungsknoten übertragen, wobei in der ersten Adreßinformation erste Identifikationsmerkmale enthalten sind. Der erste Vermittlungsknoten wertet die erste Adreßinformation mit den ersten Identifikationsmerkmalen aus und leitet daraus eine zweite Adreßinformation zur Adressierung eines ersten Adreßumsetzers ab. Dem ersten Adreßumsetzer werden zumindest Teile der ersten Identifikationsmerkmale übermittelt. Aus den ersten Identifikationsmerkmalen werden zweite Identifikationsmerkmale erzeugt, die zur Adressierung eines zweiten Vermittlungsknotens dienen. Mit den zweiten Identifikationsmerkmalen wird die Kommunikationsverbindung zwischen dem ersten und zweiten Vermittlungsknoten aufgebaut.

Das erfindungsgemäße Verfahren ermöglicht den Verbindungsaufbau auch bei im Sinne von betreiberspezifischen Rufnummern unvollständigen Adreßinformationen. Weiterhin wird die Chancengleichheit zwischen Betreibern verschiedener Kommunikationsnetze erhöht, da auch teilnehmerspezifische Angaben ohne genaue Netzkenntnis für den Verbindungsaufbau genügen.

Gemäß einer vorteilhaften Weiterbildung der Erfindung ermittelt der erste Adreßumsetzer aus den ersten Identifikationsmerkmalen die Adresse eines zuständigen zweiten Adreßumsetzers, der nach entsprechender Signalisierung zumindest Teile der zweiten Identifikationsmerkmalen erzeugt. Damit kann im Sinne eines intelligenten Netzes eine Spezialisierung der Adreßumsetzer auf bestimmte Funktionen erleichtert werden, da nicht alle ersten Adreßumsetzer einen vollständigen Datensatz zur Adreßumsetzung bereithalten müssen.

So ist es vorteilhaft, daß mehrere erste Adreßumsetzer nach geografischen Gesichtspunkten im Kommunikationsnetz angeordnet sind. Diese ersten Adreßumsetzer sind für ein bestimmtes Gebiet in einem oder mehreren Kommunikationsnetzen verantwortlich. Diese ersten Adreßumsetzer können als selbständige Einheiten im Sinne eines Service Control Points (SCP) oder in einen Vermittlungsknoten integriert sein.

Weiterhin ist es vorteilhaft, daß mehrere zweite Adreßumsetzer nach teilnehmerklassifizierenden Gesichtspunkten im Kommunikationsnetz angeordnet sind. Solche teilnehmerklassifizierenden Gesichtspunkte sind beispielsweise bestimmte Dienste (Fleurop, Notdienst), bestimmte Branchen (Hotels) oder bestimmte Teilnehmergruppen (Siemensmitarbeiter, Bewohner eines Stadtteils). Damit ist es eigenständigen Anbietern oder Betreibern möglich, für solche Dienste, Branchen oder Teilnehmergruppen eine verbesserte Erreichbarkeit zu bewirken.

Nach einer weiteren vorteilhaften Weiterbildung der Erfindung sind die ersten und/oder zweiten Adreßumsetzer als Einrichtungen verschiedener Teilnetze eines übergreifenden Kommunikationsnetz oder als eigenständige Einheiten im Sinne von intelligenten Netzen ausgeprägt. Diese Adreßumsetzer dienen bei der Adressierung als Brücke zwischen den Netzen. Die erweiterte Adressierung kann wirtschaftlicher angeboten werden, wenn sie den rufenden Teilnehmern mehrerer Kommunikationsnetze zugänglich gemacht wird.

Die zweiten Identifikationsmerkmale enthalten vorteilhafterweise betreiberspezifische Rufnummern oder Teilnehmeradressen. Mit diesen zweiten Identifikationsmerkmalen ist also ein direkter Verbindungsaufbau, ohne weitere Formatumwandlung möglich.

Die ersten Identifikationsmerkmale enthalten z.B. Anschriften oder Fahrzeugkennzeichen des Teilnehmers des zweiten Kommunikationsendgerätes, oder andere für einen Menschen leicht einprägsame Charakteristika. Die Struktur der ersten Identifikationsmerkmale sollte eine schnelle Auswahl der Adreßumsetzer und eine ausreichend gute Einschränkung für einen Suchalgorithmus gewährleisten.

Eine vorteilhafte Ausprägung der Erfindung sieht vor, daß der erste oder zweite Adreßübersetzer dem ersten Vermittlungsknoten die zweiten Identifikationsmerkmale für einen Aufbau der Kommunikationsverbindung übermittelt. Damit kann sich die Funktion der Adreßübersetzer im wesentlichen auf die Übersetzung der Adressen und evt1. eine Manipulation der Dateneinträge beschränken. Die Adreßübersetzer sind damit einfach und kostengünstig realisierbar und zugleich universell anwendbar.

Vorteilhafterweie kann ein Teilnehmer die Identifikationsmerkmale des ihm zugeordneten Kommunikationsendgerätes ändern. Damit wird dem Teilnehmer die Möglichkeit und die Verantwortung gegeben, selbst zu definieren mit welchen Identifikationsmerkmalen er erreichbar ist oder er üblicherweise bei einem abgehenden Ruf Adreßumsetzungen vornehmen läßt. Die starre Zuordnung von Kommunikationsendgerät und betreiberspezifische Rufnummer wird aufgehoben und ein weiter Gestaltungsspielraum gegeben. Z.B. für Werbekampangnen o.ä. kann auch kurzfristig eine besondere Zuordnung definiert werden.

Eine weitere vorteilhafte Ausprägung sieht vor, daß die Anzahl und/oder die Länge der ersten Identifikationsmerkmale für einen Teilnehmer klassifiziert wird. Dem Teilnehmer wird also ein limitierter und stufenweise ausbaubarer Gestaltungsspielraum gegeben, der mit vorgegebenen Gebühren verbunden werden kann. Somit ist der erfindungsgemäße Dienst stufenweise einführbar und erlaubt eine graduelle Anpassung an die Bedürfnisse des Teilnehmers. Beim Überschreiten dieser Anzahl bzw. Länge wird eine Änderung der ersten Identifikationsmerkmale für den Teilnehmer gesperrt. Damit wird das Umgehen des beschränkten Gestaltungsspielraums verhindert.

Das erfindungsgemäße Verfahren gestattet die Umsetzung zwischen verschiedenen Adresstypen, beispielsweise zwischen Rufnummern und e-mail Adressen.

Weiterhin ist es vorteilhaft, daß falls durch den ersten Vermittlungsknoten beim Auswerten der ersten Adreßinformation ein Formatfehler festgestellt wird, automatisch ein festgelegter Adreßübersetzer zur Auswertung der ersten Adreßinformation benutzt wird. Formatfehler führen damit nicht zu einem Abbruch des Verbindungsaufbaus, sondern können durch einen Adreßumsetzer, der für jeden Vermittlungsknoten individuell definiert werden kann, bedient werden. Die Vermittlungsknoten brauchen gemäß dieser Weiterbildung nicht für eine Auswahl eines geeigneten Adreßumsetzers umgerüstet werden.

Eine vorteilhafte Weiterbildung sieht vor, daß der erste und/oder zweite Adreßumsetzer den ersten Vermittlungsknoten bzw. das erste Kommunikationsendgerät über fehlende Identifikationsmerkmale informiert. Damit ist der Teilnehmer über Probleme im Verbindungsaufbau in Kenntnis gesetzt. Vorteilhafterweise wird das fehlende Identifikationsmerkmale vom ersten Kommunikationsendgerät und/oder dem ersten Vermittlungsknoten an den ersten und/oder zweiten Adreßumsetzer übermittelt. In Form eines Dialoges können gültige Identifikationsmerkmale erzeugt werden.

Die Implementierung des Verfahrens wird vereinfacht, wenn ein erstes Identifikationsmerkmale ein Zeichen für eine folgende unvollständige erste Adreßinformation enthält. Hier gibt bereits das erste Kommunikationsendgerät dem ersten Vermittlungsknoten vor, daß eine Adreßumsetzung nötig ist. Diese Maßnahme ersetzt die Detektion von Formatfehlern in den Vermittlungsknoten.

Eine vorteilhafte Anwendung des Verfahrens ist ein Mobilfunknetz, wobei Teile der zweiten Identifikationsmerkmale die Adresse eines Heimatregisters und des zweiten Kommunikationsendgerätes beschreiben. Damit wird neben der Kennzeichnung des zweiten Kommunikationsendgerätes auch dessen schnelle Lokalisierung und ein beschleunigter Verbindungsaufbau unterstützt.

Im folgenden wird die Erfindung anhand von Ausführungsbeispielen bezugnehmend auf zeichnerische Darstellung näher erläutert.

Dabei zeigen
- Fig. 1: eine schematische Ansicht eines Kommunikationsnetzes mit einem Adreßumsetzer,
- Fig. 2: eine schematische Ansicht von zwei Kommunikationsnetzen mit ersten und zweiten Adreßumsetzern,
- Fig. 3: einen Verbindungsaufbau zu einem Festnetzteilnehmer mit Adreßumsetzung in einem ersten Adreßumetzer,
- Fig. 4: einen Verbindungsaufbau zu einem Mobilfunkteilnehmer mit Adreßumsetzung in einem ersten Adreßumetzer,
- Fig. 5: einen Verbindungsaufbau zu einem Mobilfunkteilnehmer mit Adreßumsetzung und Heimatregisterabfrage in einem ersten Adreßumetzer,
- Fig. 6: einen Verbindungsaufbau zu einem Festnetzteilnehmer mit Adreßumsetzung in einem ersten Adreßumetzer und einem zweiten Adreßumsetzer, und
- Fig. 7: einen Verbindungsaufbau zu einem Festnetzteilnehmer mit Adreßumsetzung in einem ersten und zweiten Adreßumetzer sowie mit Teilnehmerdialog.

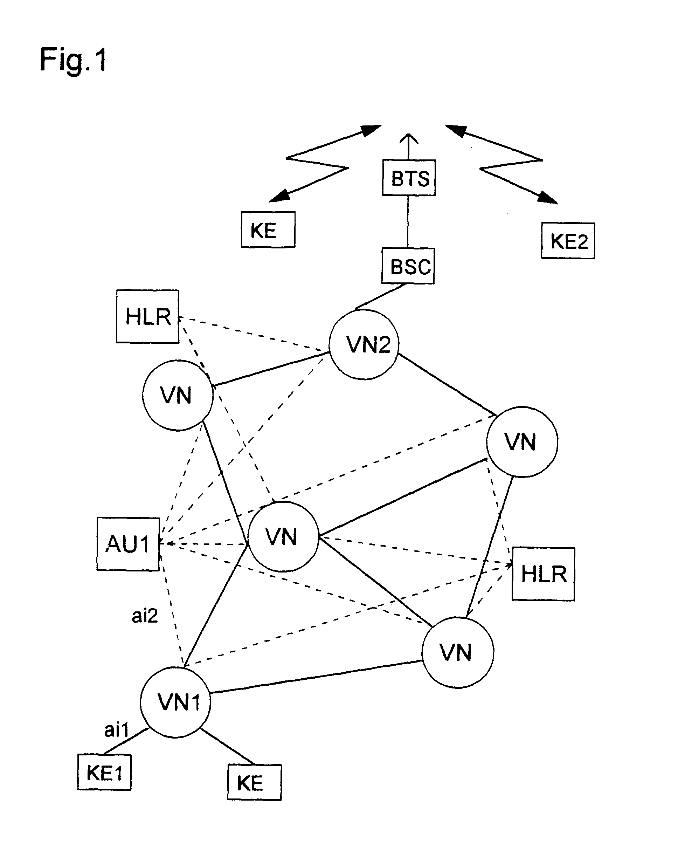

Fig. 1 zeigt ein Kommunikationsnetz mit Vermittlungsknoten VN, VN1, VN2. Die Vermittlungsknoten VN, VN1, VN2 sind digitale Vermittlungsstellen (beispielsweise EWSD der Siemens AG), Mobilvermittlungsstellen (MSC) oder Paketnetzknoten. Sie stellen, ggf. über weitere Einrichtungen BSC, BTS, die Verbindung von Kommunikationsendgeräten KE, KE1, KE2 zum Kommunikationsnetz her. Die Kommunikationsendgeräte KE, KE1, KE2 sind Teilnehmern oder Teilnehmergruppen, beispielsweise einzelnen Personen oder Familien, Organisationen, Unternehmen u.s.w. zugeordnet.

Die Vermittlungsknoten VN, VN1, VN2 sind untereinander verbunden, so daß über einen oder mehrere Vermittlungsknoten VN, VN1, VN2 Kommunikationsverbindungen zwischen den Kommunikationsendgeräten KE, KE1, KE2 aufgebaut, betrieben und wieder abgebaut werden können. Die Kommunikationsendgeräte KE, KE1, KE2 können Festnetzanschlüsse oder mobile Endgeräte sein. Die zu übertragenden Informationen können Sprachinformationen oder digitale Daten sein. Im weiteren wird von Sprachinformationen ausgegangen, so daß für einen Teilnehmer mit dem Kommunikationsendgerät KE1 eine Sprechverbindung mit dem Teilnehmer des Kommunikationsendgerät KE2 aufgebaut wird.

Die Vermittlungsknoten VN, VN1, VN2 dienen dem Vermitteln und Durchschalten der Kommunikationsverbindungen ausgehend von Adreßinformationen ai1, ai2, die den gerufenen Teilnehmer mit dem Kommunikationsendgerät KE2 bezeichnen. Weiterhin umfaßt das Kommunikationsnetz sogenannte Heimatregister HLR, die der Speicherung und Verwaltung von Teilnehmerinformationen zu mobilen Kommunikationsendgeräten KE, KE2 dienen. Ein erster Adreßumsetzer AU1 ist ebenfalls dem Kommunikationsnetz zugehörig. Der erste Adreßumsetzer AU1 und die Heimatregister HLR sind mit den Vermittlungsknoten VN, VN1, VN2 über Signalisierungsverbindungen - gestrichelte Linie - verbindbar.

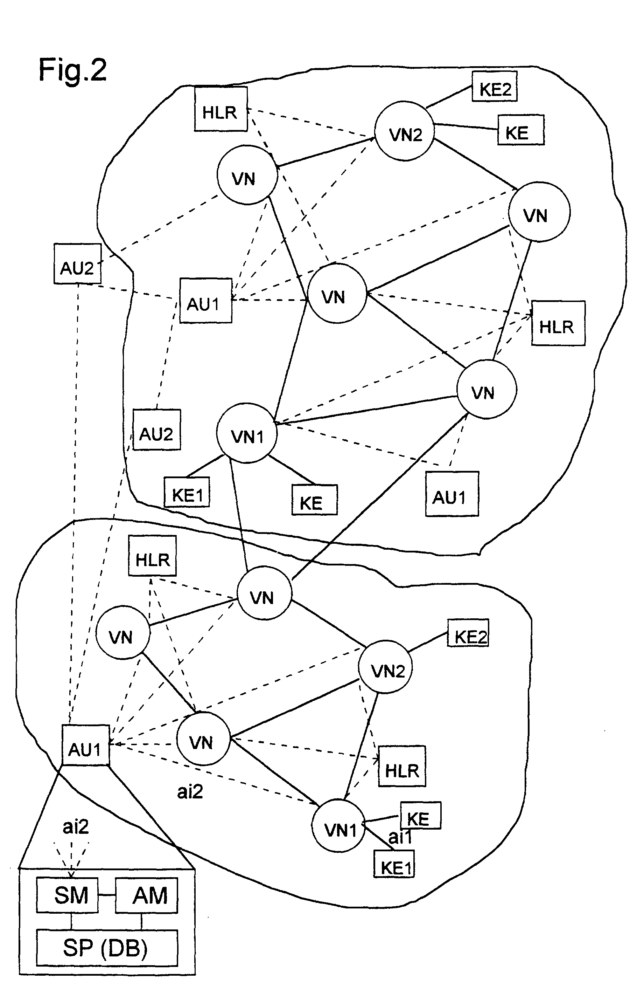

In Fig. 2 ist ein erweitertes Szenario mit zwei Kommunikationsnetzen dargestellt. Zu dem bereits mit Fig.1 beschriebenen Kommunikationsnetz - oben -, das beispielsweise ein Mobilfunknetz in Deutschland ist, kommt ein zweites Kommunikationsnetz, beispielsweise ein Festnetz in Frankreich, und ein zweiter Adreßumsetzer AU2 hinzu. In beiden Kommunikationsnetzen haben jeweils erste Adreßumsetzer AU1 einen festen Bezug zu bestimmten Vermittlungsknoten VN, VN1, VN2, im ersten Kommunikationsnetz übernimmt ein erster Adreßumsetzer AU1 für einen festgelegten Teil des Netzes die Adreßumsetzfunktion.

Der erste Adreßumsetzer AU1 wird dabei von den Vermittlungsknoten VN1 mit einer Signalisierungsmeldung, die eine erste Adreßinformation ai1 enthält, abgefragt, falls der jeweilige Vermittlungsknoten VN1 einen Formatfehler in der ersten Adreßinformation ai1 für einen Verbindungsaufbau feststellt.

Über die regionale Zuordnung von ersten Adreßumsetzern AU1 zu bestimmten Vermittlungsknoten VN, VN1, VN2 bzw. zu Teilen des Kommunikationsnetzes hinaus zeigt Fig. 2 auch zweite Adreßumsetzer AU2. Ein zweiter Adreßumsetzer AU2 ist Teil des ersten Kommunikationsnetzes und ein weiterer zweiter Adreßumsetzer AU2 wird außerhalb der Kommunikationsnetze von einem eigenen Anbieter betrieben. Auch die zweiten Adreßumsetzer AU2 sind über Signalisierungsverbindungen mit den ersten Adreßumsetzern AU1 oder mit Vermittlungsknoten VN verbindbar.

Im Unterschied zu den ersten Adreßumsetzern AU1 sind die zweiten Adreßumsetzer AU2 nicht regional zugeordnet, sondern realisieren Adreßumsetzfunktionen, die individuellen Spezialgebieten zugeordnet sind. So übernimmt der zweite Adreßumsetzer AU2 des ersten Kommunikationsnetzes Funktionen der Adreßumsetzung für Hotels in beiden Ländern und der externe Adreßumsetzer AU2 ist für die Adreßumsetzung für europäische Fleurop-Dienste verantwortlich.

Der Aufbau eines Adreßumsetzers ist beispielshaft am ersten Adreßumsetzer AU1 verdeutlicht. Der Adreßumsetzer enthält Signalisierungsmittel SM zum Empfangen von Adreßinformationen ai2 von den Vermittlungsknoten VN, VN1, VN2, Speichermittel SP zum Speichern einer Datenbank DB mit Zuordnungen von ersten im11, im12 zu zweiten im21, im22 Identifikationsmerkmalen, und Auswertemittel AM zum Ableiten von zweiten Identifikationsmerkmalen im21, im22 aus den ersten Identifikationsmerkmalen im11, im12 mit Hilfe der Datenbank DB. Die Signalisierungsmittel SM übermitteln die zweiten Identifikationsmerkmale im21, im22 zurück an die Vermittlungsknoten VN, VN1, VN2.

Die ersten Identifikationsmerkmale im11, im12 sind Informationen, die nicht zum Aufbau der gewünschten Kommunikationsverbindung ausreichen und deshalb in die zweiten Identifikationsmerkmale im21, im22 umgesetzt werden müssen. Die zweiten Identifikationsmerkmale im21, im22 bilden bereits eine ausreichende Adreßinformation, die von einem Vermittlungsknoten VN, VN1, VN2 zum Verbindungsaufbau ausgewertet wird, oder enthalten Informationsteile für eine solche ausreichende Adreßinformation.

Die ersten Identifikationsmerkmale im11, im12 sind beispielsweise der Name und die Adresse des gerufenen Teilnehmers, besondere Angaben zu seinem Lebenslauf bzw. beruflichen Werdegang oder dessen Fahrzeugkennzeichen. Weiterhin kann es ein Gattungsbegriff, z.B. Hotel, eine Kategorie - Preisgruppe II, und eine Ortsangabe - Leipzig Zentrum - sein. Die zweiten Identifikationsmerkmale im21, im22 sind hingegen eine betreiberspezifische Rufnummer für einen Telefonapparat bzw. ein Facsimilegerät oder eine e-mail Adresse mit denen ein Verbindungsaufbau möglich ist.

Eine weitere Variante für eine Adreßumsetzung sind ein erstes Identifikationsmerkmal im12, das den Wunsch für eine Umsetzung in eine e-mail Adresse enthält und ein weiteres erstes Identifikationsmerkmal im11, das eine Rufnummer enthält. Auch kann ein erstes Identifikationsmerkmal im11 die Unvollständigkeit der ersten Adreßinformation ai1 anzeigen, dies kann durch eine Eingabe im rufenden Kommunikationsendgerät KE1 erfolgen, so daß der Vermittlungsknoten VN1 den Formatfehler direkt signalisiert bekommt. Ein erstes Identifikationsmerkmal im11 kann auch einen bestimmten Adreßumsetzer AU1, AU2 angeben, bei dem der rufende Teilnehmer die korrekte Adreßumsetzung vermutet oder wo er die für ihn zutreffenden Umsetzzuordnungen gespeichert weiß.

Die Einträge der Datenbank DB können durch einen Administrator des Netzbetreibers oder Anbieters bzw. durch den Teilnehmer geändert werden. Dem Teilnehmer ist dabei eine bestimmte mit korrespondierenden Gebühren versehene Länge von Einträgen vorgegeben, innerhalb derer er die für ihn als rufenden oder gerufenen Teilnehmer gültigen Einträge über einen Signalisierungsdialog wählen kann. Über diese Länge hinausgehende Einträge werden zurückgewiesen.

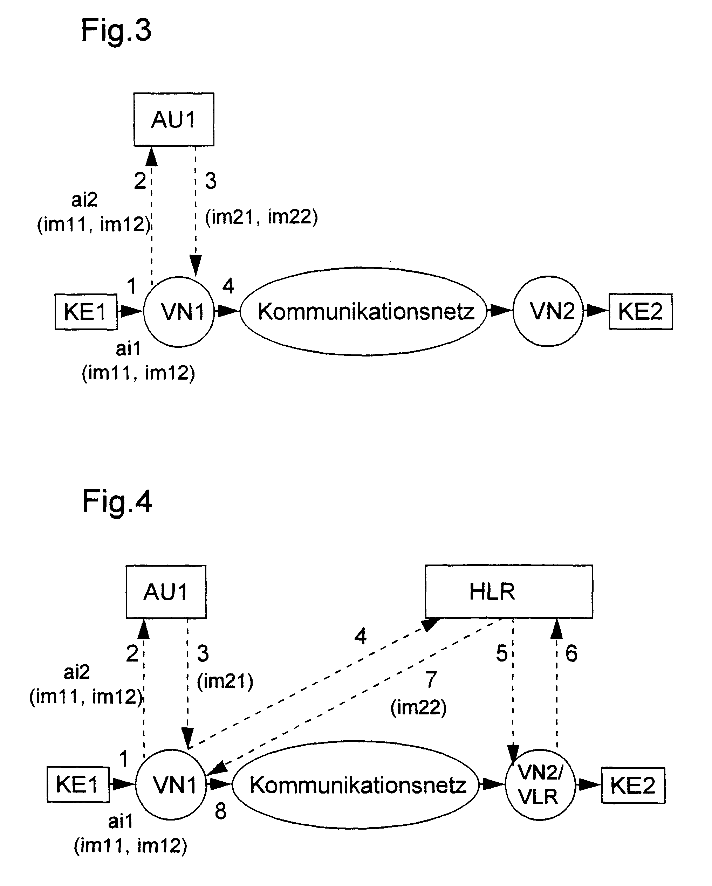

Die Fig. 3 bis 7 zeigen Verfahrensabläufe für den Aufbau einer Kommunikationsverbindung mit Adreßumsetzung. Ein erstes Kommunikationsendgerät KE1 ist jeweils mit einem ersten Vermittlungsknoten VN1 und ein zweites Kommunikationsendgerät KE2 mit einem zweiten Vermittlungsknoten VN2 verbunden. Die Verbindung zwischen den Vermittlungsknoten VN1, VN2 wird über weitere Einrichtungen des Kommunikationsnetzes - beispielsweise weitere Vermittlungsknoten VN - bewirkt. Das erste Kommunikationsendgerät KE1 ist dem rufenden und das zweite Kommunikationsendgerät KE2 dem gerufenen Teilnehmer zugeordnet.

In Fig. 3 erreicht den ersten Vermittlungsknoten VN1 ein vom ersten Kommunikationsendgerät KE1 ankommender Ruf 1 zum Aufbau einer Kommunikationsverbindung. In diesem ankommenden Ruf 1 wird eine erste Adreßinformation ai1 übermittelt, wobei in der ersten Adreßinformation ai1 erste Identifikationsmerkmale im11, im12 enthalten sind.

Im ersten Vermittlungsknoten VN1 wird die erste Adreßinformation ai1 auswertet und daraus eine zweite Adreßinformation ai2 zur Adressierung eines ersten Adreßumsetzters AU1 abgeleitet. Mit einer Anfrage 2 an den ersten Adreßumsetzter AU1 werden zumindest Teile der ersten Identifikationsmerkmale im11, im12 übermittelt.

Im ersten Adreßumsetzter AU1 werden die ersten Identifikationsmerkmale im11, im12 ausgewertet und über die Datenbank DB zweiten Identifikationsmerkmalen im21, im22 zugeordnet. Die zweiten Identifikationsmerkmale im21, im22 werden vom ersten Adreßumsetzter AU1 an den ersten Vermittlungsknoten VN1 mit einer Antwort 3 auf die Anfrage 2 übermittelt.

Die zweiten Identifikationsmerkmale im21, im22 dienen im ersten Vermittlungsknoten VN1 zur Adressierung des zweiten Vermittlungsknotens VN2. Der erste Vermittlungsknoten VN1 vermittelt über das Kommunikationsnetz den abgehenden Ruf 4 zum zweiten Vermittlungsknoten VN2 und zum zweiten Kommunikationsendgerät KE2.

In Fig. 4 ist der Verbindungsaufbau zu einem Mobilfunkteilnehmer gezeigt. Im Unterschied zum Verbindungaufbau nach Fig. 3 wird mit den zweiten Identifikationsmerkmalen im21, im22 in der Antwort 3 auf den Adreßumsetzanfrage 2 zusätzlich eine Adresse eines Heimatregisters HLR des gerufenen Mobilfunkteilnehmers übermittelt. Darauf übermittelt der erste Vermittlungsknoten VN1 dem Heimatregister HLR ein Nachricht 4 (SendRoutingInfo) zum Ermitteln des Aufenthaltsortes des Mobilfunkteilnehmers.

Das Heimatregister HLR wertet die aktuellen Teilnehmereinträge aus und ermittelt den Vermittlungsknoten VN2 mit einem Besucherregister VLR, bei dem der gerufene Mobilfunkteilnehmer momentan registriert ist. Eine Anfrage 5 (ProvideRoaming-Number) an das Besucherregister VLR fragt eine aktuell gültige Besuchernummer (MsISDN) ab. Diese Besuchernummer wird dem Heimatregister HLR in einer Antwort 6 (ProvideRoaming-NumberResult) übermittelt, worauf auch an den ersten Vermittlungsknoten VN1 eine aktuelle Leitweginformation mit einer Antwort 7 (SendRoutingInfoResult) gesendet wird.

Mit dieser Leitweginformation und den zweiten Identifikationsmerkmalen im21, im22 erfolgt der Verbindungsaufbau 8 zum zweiten Kommunikationsendgerät KE2.

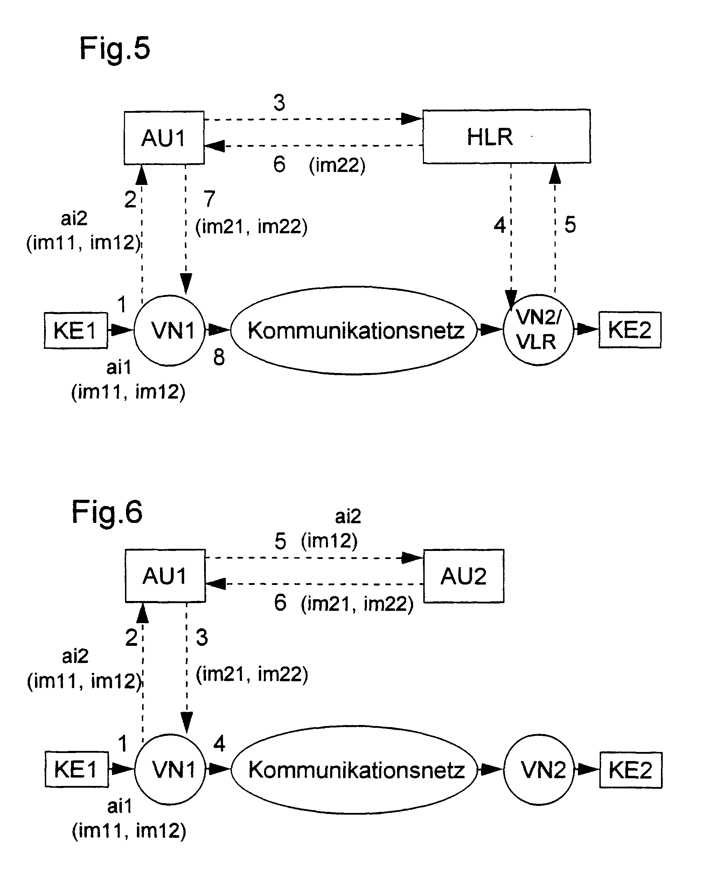

Beim Verbindungsaufbau nach Fig. 5 leitet der erste Adreßumsetzer AU1 die Abfrage 3 - 6 beim Heimatregister HLR und Besucherregister VLR der Fig. 4 selbst ein. Dazu muß der erste Adreßumsetzer AU1 um die Interworking Funktionen dieser Abfrage erweitert werden. Der erste Vermittlungsknoten VN1 erhält vom ersten Adreßumsetzer AU1 daraufhin mit einer Nachricht 7 die zweiten Idenfikationsmerkmale im21, im22 und die Leitweginformation für den gerufenen Mobilfunkteilnehmer mit dem zweiten Kommunikationsendgerät KE2.

Fig. 6 zeigt den Vermittlungsaufbau ähnlich Fig. 3, jedoch mit einem ersten Adreßumsetzer AU1 und einem zweiten Adreßumsetzer AU2. Der erste Adreßumsetzer AU1 erkennt auf die Anfrage 2 zur Adreßumsetzung, daß der zweite Adreßumsetzer AU2 für die erforderliche oder gewünschte Umsetzung bestimmt ist und leitet eine Anfrage 5 an den zweiten Adreßumsetzer AU2 ein. Der zweite Adreßumsetzer AU2 ermittelt die zweiten Idenfikationsmerkmale im21, im22 und übermittelt sie dem ersten Adreßumsetzer AU1, der diese zweiten Idenfikationsmerkmale im21, im22 wie bereits gezeigt an den ersten Vermittlungsknoten VN1 weiterleitet.

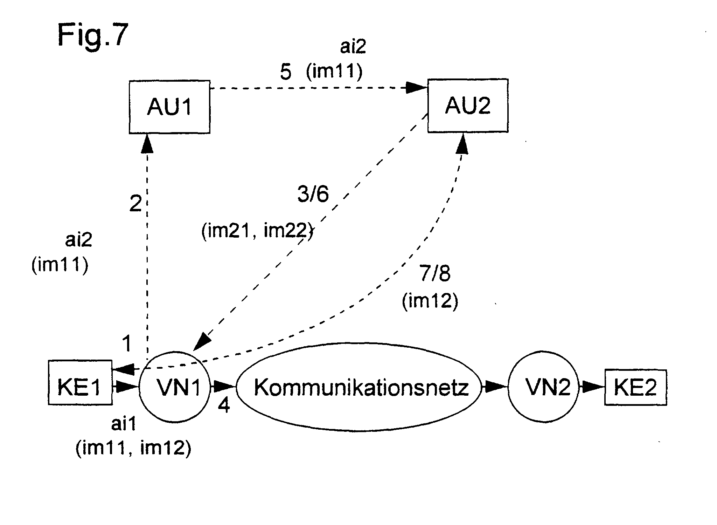

Anhand von Fig. 7 ist der Fall gezeigt, daß ein Adreßumsetzer, beispielsweise der zweite Adreßumsetzer AU2, feststellt, daß die ersten Idenfikationsmerkmale im11, im12 für eine Adreßumsetzung nicht ausreichen. Mittels eines Dialoges 7/8 mit dem ersten Kommunikationsendgerät KE1 werden die fehlenden Angaben ergänzt oder falsche Angaben korrigiert, worauf der erste Vermittlungsknoten VN1 vom Adreßumsetzer AU2 die zweiten Idendifikationsmerkmale im21, im22 für einen Verbindungsaufbau übermittelt bekommt.

Die Abfragen an die Adreßumsetzer AU1, AU2 sind Signalisierungsverbindungen. Gleiches gilt für den Dialog zwischen dem ersten Kommunikationsendgerät KE1 und den Adreßumsetzern AU1, AU2.

## Patentansprüche

1. Verfahren zum Aufbau einer Kommunikationsverbindung in einem aus mehreren vernetzten Vermittlungsknoten (VN, VN1, VN2) bestehenden Kommunikationsnetz, wobei über die Vermittlungsknoten (VN) Kommunikationsendgeräte (KE, KE1, KE2) angeschlossen sind, bei dem
- von einem ersten Kommunikationsendgerät (KE1) zum Aufbau einer Kommunikationsverbindung eine erste Adreßinformation (ai1) an einen ersten Vermittlungsknoten (VN1) übertragen wird, wobei in der ersten Adreßinformation (ai1) erste Identifikationsmerkmale (im11, im12) enthalten sind,
- der erste Vermittlungsknoten (VN1) die erste Adreßinformation (ai1) mit den ersten Identifikationsmerkmalen (im11, im12) auswertet, daraus eine zweite Adreßinformation (ai2) zur Adressierung eines Adreßübersetzers (AU1) für die ersten Identifikationsmerkmale (im11, im12) ableitet und dem Adreßübersetzer (AU1) zumindest Teile der ersten Identifikationsmerkmale (im11, im12) übermittelt,
**dadurch gekennzeichnet, daß**
- ausgehend vom Adreßübersetzer (AU1) Symbole der ersten Identifikationsmerkmale (im11, im12) in Symbole zweiter Identifikationsmerkmale (im21, im22) übersetzt werden, die zur Adressierung eines zweiten Vermittlungsknotens (VN2) dienen,
- mit den zweiten Identifikationsmerkmalen (im21, im22) die Kommunikationsverbindung zwischen dem ersten und zweiten Vermittlungsknoten (VN1, VN2) aufgebaut wird.

2. Verfahren nach Anspruch 1, bei dem
ein erster Adreßübersetzer (AU1) aus den ersten Identifikationsmerkmalen (im11, im12) die Adresse eines zuständigen zweiten Adreßübersetzers (AU2) für Identifikationsmerkmale (im11, im12) ermittelt, der nach entsprechender Signalisierung durch die Übertragung wenigstens von Teilen der ersten Identifikationsmerkmale (im11, im12) die zweiten Identifikationsmerkmale (im21, im22) erzeugt.

3. Verfahren nach Anspruch 1 oder 2, bei dem
der erste Adreßübersetzer (AU1) nach geografischen Gesichtspunkten im Kommunikationsnetz ausgewählt wird.

4. Verfahren nach einem der vorherigen Ansprüche, bei dem der zweite Adreßübersetzer (AU2) nach teilnehmerklassifizierenden Gesichtspunkten im Kommunikationsnetz ausgewählt wird.

5. Verfahren nach einem der vorherigen Ansprüche, bei dem die ersten und/oder zweite Adreßübersetzer (AU1, AU2) als Einrichtungen verschiedener Kommunikationsnetze ermittelt werden.

6. Verfahren nach einem der vorherigen Ansprüche, bei dem die zweiten Identifikationsmerkmale (im21, im22) betreiberspezifische Rufnummern oder Teilnehmeradressen enthalten.

7. Verfahren nach einem der vorherigen Ansprüche, bei dem die ersten Identifikationsmerkmale (im11, im12) Namen, Anschriften oder Fahrzeugkennzeichen des Teilnehmers des zweiten Kommunikationsendgerätes (KE2) enthalten.

8. Verfahren nach einem der vorherigen Ansprüche, bei dem der erste oder ein zweiter Adreßübersetzer (AU1, AU2) dem ersten Vermittlungsknoten (VN1) die zweiten Identifikationsmerkmale (im21, im22) für den Aufbau der Kommunikationsverbindung übermittelt.

9. Verfahren nach einem der vorherigen Ansprüche, bei dem ein Teilnehmer die Identifikationsmerkmale (im11, im12, im21, im22) des ihm zugeordneten Kommunikationsendgerätes (KE, KE1, KE2) ändern kann.

10. Verfahren nach einem der vorherigen Ansprüche, bei dem die Anzahl und/oder die Länge der ersten Identifikationsmerkmale (im11, im12) für einen Teilnehmer klassifiziert ist und beim Überschreiten dieser Anzahl bzw. Länge eine Änderung der ersten Identifikationsmerkmale (im11, im12) für den Teilnehmer gesperrt wird.

11. Verfahren nach einem der vorherigen Ansprüche, bei dem die ersten Identifikationsmerkmale (im11, im12) einem ersten Adressentyp und die zweiten Identifikationsmerkmalen (im21, im22) einem zweiten Adressentyp entsprechen.

12. Verfahren nach einem der vorherigen Ansprüche, bei dem durch den ersten Vermittlungsknoten (VN1) beim Auswerten der ersten Adreßinformation (ai1) mit den ersten Identifikationsmerkmalen (im11, im12) ein Formatfehler festgestellt wird und automatisch ein festgelegter Adreßübersetzer (AU1) zur Auswertung der Adreßinformation (ai1, ai2) benutzt wird.

13. Verfahren nach einem der vorherigen Ansprüche, bei dem der erste und/oder ein zweiter Adreßübersetzer (AU1, AU2) den ersten Vermittlungsknoten (VN1) und/oder das erste Kommunikationsendgerät über eine unvollständige erste Adreßinformation (ai1) informiert.

14. Verfahren nach Anspruch 13, bei dem
das in der unvollständigen ersten Adreßinformation (ai1) fehlende Identifikationsmerkmal (im12) vom ersten Kommunikationsendge-rät (KE1) und/oder dem ersten Vermittlungsknoten (VN1) an den ersten und/oder einen zweiten Adreßübersetzer (AU1, AU2) übermittelt wird.

15. Verfahren nach einem der vorherigen Ansprüche, bei dem ein erstes Identifikationsmerkmal (im11) ein Zeichen für eine unvollständige erste Adreßinformation (ai1) enthält.

16. Verfahren nach einem der vorherigen Ansprüche, bei dem im als Mobilfunknetz ausgeprägten Kommunikationsnetz Teile der zweiten Identifikationsmerkmale (im21, im22) die Adresse eines Heimatregisters (HLR) des zweiten Kommunikationsendgerätes (KE2) beschreiben.

17. Adreßübersetzer (AU1, AU2) für ein aus mehreren vernetzten Vermittlungsknoten (VN, VN1, VN2) bestehenden Kommunikationsnetz, wobei über die Vermittlungsknoten (VN, VN1, VN2) Kommunikationsendgeräte (KE, KE1, KE2) angeschlossen sind, zum Unterstützen des Aufbaus einer Kommunikationsverbindung von einem ersten Kommunikationsendgerät (KE1) zu einem zweiten Kommunikationsendgerät (KE2),
- mit Signalisierungsmitteln (SM) zum Empfangen einer zweiten Adreßinformation (ai2) von einem ersten Vermittlungsknoten (VN1), wobei in der zweiten Adreßinformation (ai2) erste Identifikationsmerkmale (im11, im12) enthalten sind,
- mit Speichermitteln (SP) zum Speichern einer Datenbank (DB) zum Zuordnen von ersten zu zweiten Identifikationsmerkmalen (im11, im12, im21, im22),
- mit Auswertemitteln (AM) zum Übersetzen von Symbolen der ersten Identifikationsmerkmalen (im11, im12) in Symbole der zweiten Identifikationsmerkmale (im21, im22) mit Hilfe der Datenbank (DB).

18. Adreßübersetzer (AU1, AU2) nach Anspruch 17, bei dem
die Signalisierungsmittel (SM) derart ausgebildet sind, daß zumindest Teile der zweiten Identifikationsmerkmale (im21, im22) über einen Dialog mit dem ersten Kommunikationsendgerät (KE1) abgeleitet werden.

19. Adreßübersetzer (AU1, AU2) nach Anspruch 17 oder 18, der Teil eines Vermittlungsknotens (VN) ist.

20. Adreßübersetzer (AU1, AU2) nach Anspruch 17 oder 18, der nach geografischen Gesichtspunkten im Kommunikationsnetz angeordnet ist.

21. Adreßübersetzer (AU2) nach Anspruch 17 oder 18, der nach teilnehmerklassifizierenden Gesichtspunkten im Kommunikationsnetz angeordnet ist.

## Claims

1. Method for establishing a communication link in a communication network comprising a plurality of interlinked switching nodes (VN, VN1, VN2), with communication terminals (KE, KE1, KE2) being connected via the switching nodes (VN), in which
- a first communication terminal (KE1) transmits a first item of address information (ai1) to a first switching node (VN1) in order to establish a communication link, the first item of address information (ai1) containing first identification features (im11, im12),
- the first switching node (VN1) evaluates the first item of address information (ai1) containing the first identification features (im11, im12), derives therefrom a second item of address information (ai2) for addressing an address converter (AU1) for the first identification features (im11, im12), and transmits at least sections of the first identification features (im11, im12) to the address converter (AU1),
**characterized in that**
- taking the address converter (AU1) as the starting point, symbols of the first identification features (im11, im12) are converted into symbols of second identification features (im21, im22), which are used for addressing a second switching node (VN2),
- the second identification features (im21, im22) are used to establish the communication link between the first and second switching nodes (VN1, VN2).

2. Method according to Claim 1, in which
a first address converter (AU1) uses the first identification features (im11, im12) to determine the address of a relevant second address converter (AU2) for identification features (im11, im12) which produces the second identification features (im21, im22) on the basis of appropriate signalling by transmitting at least sections of the first identification features (im11, im12).

3. Method according to Claim 1 or 2, in which
the first address converter (AU1) is selected on the basis of geographical aspects in the communication network.

4. Method according to one of the preceding claims, in which the second address converter (AU2) is selected on the basis of subscriber-classifying aspects in the communication network.

5. Method according to one of the preceding claims, in which the first and/or second address converters (AU1, AU2) are ascertained to be facilities in different communication networks.

6. Method according to one of the preceding claims, in which the second identification features (im21, im22) contain operator-specific telephone numbers or subscriber addresses.

7. Method according to one of the preceding claims, in which the first identification features (im11, im12) contain names, addresses or vehicle registration numbers for the subscriber on the second communication terminal (KE2).

8. Method according to one of the preceding claims, in which the first or a second address converter (AU1, AU2) transmits the second identification features (im21, im22) to the first switching node (VN1) in order to establish the communication link.

9. Method according to one of the preceding claims, in which a subscriber is able to change the identification features (im11, im12, im21, im22) of his associated communication terminal (KE, KE1, KE2).

10. Method according to one of the preceding claims, in which the number and/or the length of the first identification features (im11, im12) is classified for a subscriber, and, if this number or length is exceeded, the subscriber is prevented from changing the first identification features (im11, im12).

11. Method according to one of the preceding claims, in which the first identification features (im11, im12) correspond to a first address type and the second identification features (im21, im22) correspond to a second address type.

12. Method according to one of the preceding claims, in which the first switching node (VN1) detects a format error when evaluating the first item of address information (ai1) containing the first identification features (im11, im12), and a stipulated address converter (AU1) is automatically used to evaluate the item of address information (ail, ai2).

13. Method according to one of the preceding claims, in which the first and/or a second address converter (AU1, AU2) informs the first switching node (VN1) and/or the first communication terminal about an incomplete first item of address information (ai1).

14. Method according to Claim 13, in which
the missing identification feature (im12) in the imcomplete first item of address information (ai1) is transmitted from the first communication terminal (KE1) and/or the first switching node (VN1) to the first and/or a second address converter (AU1, AU2).

15. Method according to one of the preceding claims, in which a first identification feature (im11) contains an indication of an incomplete first item of address information (ai1).

16. Method according to one of the preceding claims, in which, in the communication network which is in the form of a mobile radio network, sections of the second identification features (im21, im22) describe the address of a home location register (HLR) for the second communication terminal (KE2).

17. Address converter (AU1, AU2) for a communication network comprising a plurality of interlinked switching nodes (VN, VN1, VN2), with communication terminals (KE, KE1, KE2) being connected via the switching nodes (VN, VN1, VN2), for supporting the establishment of a communication link between a first communication terminal (KE1) and a second communication terminal (KE2),
- having signalling means (SM) for receiving a second item of address information (ai2) from a first switching node (VN1), the second item of address information (ai2) containing first identification features (im11, im12),
- having memory means (SP) for storing a database (DB) for assigning first to second identification features (im11, im12, im21, im22),
- having evaluation means (AM) for converting symbols of the first identification features (im11, im12) into symbols of the second identification features (im21, im22) using the database (DB).

18. Address converter (AU1, AU2) according to Claim 17, in which the signalling means (SM) are designed such that at least sections of the second identification features (im21, im22) are derived using a dialogue with the first communication terminal (KE1).

19. Address converter (AU1, AU2) according to Claim 17 or 18, which is part of a switching node (VN).

20. Address converter (AU1, AU2) according to Claim 17 or 18, which is arranged in the communication network on the basis of geographical aspects.

21. Address converter (AU2) according to Claim 17 or 18, which is arranged in the communication network on the basis of subscriber-classifying aspects.

## Revendications

1. Procédé destiné à l'établissement d'une liaison de communication dans un réseau de communication constitué de plusieurs noeuds de commutation (VN, VN1, VN2) connectés en réseau, des appareils terminaux de communication (KE, KE1, KE2) étant raccordés par l'intermédiaire des noeuds de commutation (VN), dans lequel
- un premier appareil terminal de communication (KE1) envoie, pour l'établissement d'une liaison de communication, une première information d'adresse (ai1) à un premier noeud de commutation (VN1), la première information d'adresse (ai1) contenant des premiers critères d'identification (im 11, im12),
- le premier noeud de commutation (VN1) analyse la première information d'adresse (ai1) avec les premiers critères d'identification (im11, im12), en déduit une deuxième information d'adresse (ai2) destinée à l'adressage d'un traducteur d'adresses (AU1) pour les premiers critères d'identification (im11, im12) et transmet au traducteur d'adresses (AU1) au moins des parties des premiers critères d'identification (im11, im12),
**caractérisé par le fait**
- **que**, partant du traducteur d'adresses (AU1), des symboles des premiers critères d'identification (im11, im12) sont traduits en symboles de deuxièmes critères d'identification (im21, im22), qui servent à l'adressage d'un deuxième noeud de commutation (VN2),
- **que**, avec les deuxièmes critères d'identification (im21, im22), la liaison de communication est établie entre le premier et le deuxième noeud de commutation (VN1, VN2).

2. Procédé selon la revendication 1, dans lequel
un premier traducteur d'adresses (AU1) détermine, à partir des premiers critères d'identification (im11, im12), l'adresse d'un deuxième traducteur d'adresses (AU2), compétent pour des critères d'identification (im11, im12), qui, après une signalisation correspondante, génère, grâce à la transmission d'au moins des parties des premiers critères d'identification (im11, im12), les deuxièmes critères d'identification (im21, im22).

3. Procédé selon la revendication 1 ou 2, dans lequel
le premier traducteur d'adresses (AU1) est choisi dans le réseau de communication selon des considérations géographiques.

4. Procédé selon l'une des revendications précédentes, dans lequel
le deuxième traducteur d'adresses (AU2) est choisi dans le réseau de communication selon des considérations de classification des abonnés.

5. Procédé selon l'une des revendications précédentes, dans lequel
le premier et/ou le deuxième traducteur d'adresses (AU1, AU2) sont déterminés en tant que dispositifs de réseaux de communication différents.

6. Procédé selon l'une des revendications précédentes, dans lequel
les deuxièmes critères d'identification (im21, im22) renferment des numéros d'appel ou des adresses d'abonnés spécifiques aux opérateurs.

7. Procédé selon l'une des revendications précédentes, dans lequel
les premiers critères d'identification (im11, im12) renferment des noms, des adresses ou des numéros d'immatriculation de l'abonné du deuxième appareil terminal de communication (KE2).

8. Procédé selon l'une des revendications précédentes, dans lequel
le premier ou un deuxième traducteur d'adresses (AU1, AU2) transmet au premier noeud de commutation (VN1) les deuxièmes critères d'identification (im21, im22) pour l'établissement de la liaison de communication.

9. Procédé selon l'une des revendications précédentes, dans lequel
un abonné peut modifier les critères d'identification (im11, im12, im21, im22) de l'appareil terminal de communication (KE, KE1, KE2) qui lui est affecté.

10. Procédé selon l'une des revendications précédentes, dans lequel
le nombre et/ou la longueur des premiers critères d'identification (im11, im12) sont classifiés pour un abonné et, lorsque ce nombre ou cette longueur sont dépassés, une modification des premiers critères d'identification (im11, im12) est bloquée pour l'abonné.

11. Procédé selon l'une des revendications précédentes, dans lequel
les premiers critères d'identification (im11, im12) correspondent à un premier type d'adresses et les deuxièmes critères d'identification (im21, im22) à un deuxième type d'adresses.

12. Procédé selon l'une des revendications précédentes, dans lequel,
lors de l'analyse de la première information d'adresse (ai1) avec les premiers critères d'identification (im11, im12), le premier noeud de commutation (VN1) constate une erreur de format et un traducteur d'adresse (AU1) défini est utilisé automatiquement pour l'analyse de l'information d'adresse (ai1, ai2).

13. Procédé selon l'une des revendications précédentes, dans lequel
le premier et/ou le deuxième traducteur d'adresses (AU1, AU2) informe le premier noeud de commutation (VN1) et/ou le premier appareil terminal de communication au sujet d'une première information d'adresse (ai1) incomplète.

14. Procédé selon la revendication 13, dans lequel
le critère d'identification (im12) manquant dans la première information d'adresse (ai1) incomplète est transmis par le premier appareil terminal de communication (KE1) et/ou par le premier noeud de commutation (VN1) au premier et/ou au deuxième traducteur d'adresses (AU1, AU2).

15. Procédé selon l'une des revendications précédentes, dans lequel
un premier critère d'identification (im11) renferme un signe pour une première information d'adresse (ai1) incomplète.

16. Procédé selon l'une des revendications précédentes, dans lequel,
dans le réseau de communication conçu comme réseau de radio mobile, des parties des deuxièmes critères d'identification (im21, im22) décrivent l'adresse d'un registre d'origine (HLR) du deuxième appareil terminal de communication (KE2).

17. Traducteur d'adresses (AU1, AU2) prévu pour un réseau de communication constitué de plusieurs noeuds de commutation (VN, VN1, VN2) connectés en réseau, des appareils terminaux de communication (KE, KE1, KE2) étant raccordés par l'intermédiaire des noeuds de commutation (VN, VN1, VN2), et destiné à supporter l'établissement d'une liaison de communication d'un premier appareil terminal de communication (KE1) vers un deuxième appareil terminal de communication (KE2),
- avec des moyens de signalisation (SM) destinés à recevoir une deuxième information d'adresse (ai2) venant d'un premier noeud de commutation (VN1), la deuxième information d'adresse (ai2) renfermant des premiers critères d'identification (im11, im12),
- avec des moyens de mémorisation (SP) destinés à mémoriser une base de données (DB) renfermant une concordance entre des premiers et des deuxièmes critères d'identification (im11, im12, im21, im22),
- avec des moyens d'analyse (AM) destinés à traduire, avec l'aide de la base de données (DB), des symboles des premiers critères d'identification (im11, im12) en symboles des deuxièmes critères d'identification (im21, im22).

18. Traducteur d'adresses (AU1, AU2) selon la revendication 17 dans lequel
les moyens de signalisation (SM) sont conçus de telle sorte que au moins des parties des deuxièmes critères d'identification (im21, im22) sont déduits grâce à un dialogue avec le premier appareil terminal de communication (KE1).

19. Traducteur d'adresses (AU1, AU2) selon la revendication 17 ou 18 qui fait partie d'un noeud de commutation (VN).

20. Traducteur d'adresses (AU1, AU2) selon la revendication 17 ou 18 qui est disposé, dans le réseau de communication, selon des considérations géographiques.

21. Traducteur d'adresses (AU1, AU2) selon la revendication 17 ou 18 qui est disposé, dans le réseau de communication, selon des considérations de classification des abonnés.
